# EUROPEAN PATENT APPLICATION

(11) **EP 1 394 212 A1**
(43) Date of publication of application: **03.03.2004**
(21) Application number: 03018615.9
(22) Date of filing: 19.08.2003
(51) Int. Cl.: C08L 67/00, C08K 3/34, C08K 3/36, C08L 79/08

(54) **Polyester resin composition containing inorganic filler, polyetherimide, and polymer containing polyethylene naphthalate in constituent unit thereof**

(30) Priority: 27.08.2002 JP 2002246951
(71) Applicant: Fuji Photo Film Co., Ltd., Minami-Ashigara-shi, Kanagawa (JP)
(72) Inventor: Yoshida, Tetsuya, Fujinomiya-shi Shizuoka-ken (JP); Shirokura, Yukio, Fujinomiya-shi Shizuoka-ken (JP); Kegasawa, Tadahiro, Fujinomiya-shi Shizuoka-ken (JP); Okamoto, Masami, Otsu-shi Shiga-ken (JP)
(74) Representative: HOFFMANN - EITLE

(57) **Abstract**

The present invention is a polyester resin composition comprising an inorganic filler such as a swellable, lamellar silicate organized by an organizing agent, polyetherimide, and a polymer containing polyethylene naphthalate in a constituent unit thereof, which polymer is preferably a copolymer containing polyethylene terephthalate and polyethylene naphthalate as copolymerized components.

## Description

### BACKGROUND OF THE INVENTION

### Field of the Invention

The present invention relates to a polyester composition containing an inorganic filler, and more particularly to a polyester resin composition in which an inorganic filler is dispersed in a polyester resin containing polyethylene naphthalate (PEN) in the constituent unit thereof.

### Description of the Related Art

A thermoplastic polyester represented by polyethylene terephthalate (hereinafter abbreviated as "PET" upon occasion) or polybutylene terephthalate (PBT) exhibits excellent heat resistance and processability and therefore is used in various applications such as formed articles, films, or fibers.

Reinforced resin compositions, which are obtained by mixing or kneading a thermoplastic polyester with a fibrous reinforcing material such as glass fibers or carbon fibers, or with an inorganic material, such as a calcium carbonate, a clay mineral or mica, in order to further improve mechanical strength (mechanical properties) and heat resistance, are also widely known. However, in the case of the inorganic material, there is a problem in that sufficient mechanical strength or heat resistance cannot be ensured because it is difficult to form minute inorganic particles with just the mixing or kneading, and thus, the particles cannot be evenly dispersed. Japanese Patent Application Laid-Open (JP-A) No. 6-56975 discloses a composition in which a kaolin, talc, or the like is dispersed in a PET/PEN copolymer resin, but this composition also has the above-mentioned problem. In particular, in the case where heat resistance is not sufficient, the polyester itself is hydrolyzed when processed at a high temperature. For this reason, a formed article or film having good appearance and physical properties cannot be obtained practically. On the other hand, adding a large amount of an inorganic material in order to raise mechanical strength and heat resistance causes an increase of specific gravity or an impairment of processability.

In recent years, as techniques for solving the above-mentioned problems, various composite materials, in which heat resistance and mechanical properties are improved by using small amounts of an inorganic material by dispersing, at a molecular level, a lamellar silicate in a polyester resin, have been proposed. For example, JP-A No. 62-74957 discloses a composite material, which comprises a lamellar clay mineral dispersed uniformly in polyamide and has excellent strength, rigidity, and heat resistance. Certainly, even small amounts of the lamellar clay mineral can remarkably improve mechanical properties and heat resistance. However, in the case of polyester, it is impossible to obtain a composite in which the lamellar clay mineral is uniformly dispersed as in the case of polyamide by the method disclosed in the above-mentioned gazette. Because of this, although JP-A No. 3-62846 discloses a technique in which the dispersibility of the lamellar clay mineral is improved by the addition of a compatibilizer, this method provides little improvement in the mechanical properties and heat resistance and only a formed article, a toughness of which is greatly reduced, can be obtained.

Moreover, JP-A No. 8-53572 discloses a resin composition comprising a lamellar silicate, which has a non-reactive compound between layers and is dispersed in a polymer. However, when a polyester resin is used as the matrix, it is impossible to obtain a formed article, film, or the like having good appearance and physical properties because temperature at the time of formation is high and therefore hydrolysis of the resin tends to occur easily.

JP-A No. 11-130951 discloses a polyester composite material containing a lamellar silicate organized by a phosphonium salt, and maintains that the mechanical properties and heat resistance can be improved thereby. Certainly, coloration or the like due to the thermal decomposition of the organizing agent itself is prevented and the color becomes better and the mechanical properties and heat resistance are somewhat improved. However, the presence of the organic cation of the organizing agent accelerates the hydrolysis of the polyester resin when heated (at the time of formation) and thus the mechanical properties and heat resistance of the composite material deteriorates. As a result, formed articles or films that can withstand actual use cannot be obtained.

JP-A No. 11-1605 discloses that a lamellar silicate can be dispersed at a high level into a polyester resin by ionic bonding organo-phosphonium ions interlaminarly, and thus, the polyester resin can be made into a formed article having excellent strength, rigidity, and heat resistance. However, as in the above-mentioned case, this method cannot prevent hydrolysis of the resin when heated. Moreover, even in the compositions and resin films described in JP-A Nos. 2000-53847 and 2000-327805, there is a problem with respect to resistance to hydrolysis of the resin when heated.

Further, JP-A Nos. 2001-323143, 2001-323144, 2001-323145, and 2001-329150 each propose techniques which improve the mechanical properties and thermal stability when heated of a polyester resin composition and thus improve the balance of physical properties. However, in each of these techniques, processes are complicated and a step in which a lamellar compound is surface-treated with a polyether compound is required. Thus, there is a problem in that productivity is inferior.

As stated above, a polyester resin compound, which comprises an inorganic material such as a lamellar silicate uniformly dispersed in the polyester resin and has excellent appearance and further has high strength (mechanical strength) and heat resistance free from hydrolysis even at the time of formation (when heated) , has not yet been provided.

Therefore, there is a need for a polyester resin composition which comprises an inorganic filler having sizes of nanometer order dispersed at a high level in the polyester, wihch has high strength and heat resistance free from hydrolysis at the time of formation and which further has high transparency with low haze, dimension stability, and oxygen barrier property.

### SUMMARY OF THE INVENTION

The invention is a polyester resin composition comprising an inorganic filler, polyetherimide (hereinafter abbreviated as "PEI" upon occasion) , and a polymer containing polyethylene naphthalate (hereinafter abbreviated as "PEN" upon occasion) in a constituent unit thereof.

### DETAILED DESCRIPTION OF THE INVENTION

The polyester resin composition of the present invention contains polyetherimide (PEI) as a dispersing aid together with an inorganic filler and a resin component.

The polyester resin composition of the invention will be described in detail below.

The polyester resin composition of the invention includes an inorganic filler, polyetherimide (PEI), and a polymer containing polyethylene naphthalate (PEN) in a constituent unit thereof and may further contain other component.

### [Polymers containing polyethylene naphthalate (PEN) in a constituent unit thereof]

The polyester resin composition of the invention contains a polymer comprising at least polyethylene naphthalate (PEN) in the constituent unit thereof. This polymer may be a homopolymer comprised solely of PEN or may be a copolymer obtained by copolymerizing PEN and other polyester resin and/or monomer.

For the copolymerization, a dicarboxylic acid component and a glycol component are used. Although the dicarboxylic acid comprises 2,6-naphthalene dicarboxylic acid as a main component, part (normally 15% by mol or less of the total amount of acid components) thereof may be replaced with one or two or more of bifunctional acids such as oxalic acid, succinic acid, adipic acid, sebacic acid, dimeric acid, hexahydroterephthalic acid, phthalic acid, isophthalic acid, terephthalic acid, 2,7-naphthalenedicarboxylic acid, 1,5-naphthalenedicarboxylic acid, diphenyldicarboxylic acid, diphenyletherdicarboxylic acid, diphenoxyethane-4,4'-dicarboxylic acid, diphenylsulfonedicarboxylic acid, sodium 3,5-dicarboxybenzenesulfonate, glycolic acid, p-oxybenzoic acid, and p-oxyethoxybenzoic acid.

Although the glycol component comprises ethylene glycol as a main component, part (normally 30% by mol or less of the total amount of glycol components) thereof may be replaced with one or two or more of dioxycompounds such as polyethylene glycol represented by HO (CH₂)ₙOK (where n denotes an integer of 3 to 10) , isobutylene glycol, neopentyl glycol, 1,4-cyclohexanediol, 2,2-bis-4-hydroxyphenylpropane, hydroquinone, 1,5-dihydroxynaphthalene, and 2,6-dihydroxynaphthalene.

The polymer is preferably a PET/PEN copolymer and more preferably a PET/PEN copolymer obtained by using 2,6-naphthalenedicarboxylic acid and terephthalic acid. These copolymers may comprise other constituent unit by copolymerization, insofar as the effects of the invention are not inhibited.

The PET/PEN copolymer can be obtained by a condensation reaction between dicarboxylic acid components, which is terephthalic acid or an ester derivative thereof and naphthalene-2,6-dicarboxylic acid or an ester derivative thereof, and ethylene glycol or an ester derivative thereof. In this case, the content of the naphthalene-2 , 6 - dicarboxylic acid or an ester derivative thereof in the dicarboxylic acid components is preferably 1% by mol or more and more preferably 5% by mol or more. It is possible to adjust the above-described content such that the PEN proportion falls within the range up to 100%.

Moreover, the above-mentioned copolymer may contain a polar group such as an amide group, a sulfonic group, and/or the like.

In the above-mentioned polymer, the polymerization proportion (ratio) of PEN in the polymer (or the copolymer) is preferably 1 to 100% by mol and more preferably 5 to 100% by mol. If the polymerization proportion of PEN is less than 1% by mol, the compatibility with PEI, which will be described later, decreases. Because of this, the dispersibility of the inorganic filler may be reduced and, as a result, the strength or formability may be impaired.

### [Inorganic filler]

The polyester resin composition of the invention contains an inorganic filler together with the above-mentioned polymer (or copolymer). The incorporation of the inorganic filler can further improve the strength and heat resistance of the formed articles, and films made of the polyester resin composition.

A swellable, lamellar silicate is particularly preferable as the inorganic filler. Any of swellable, lamellar silicates may be used and it may be selected from known ones. Examples of the swellable, lamellar silicate include smectite clay minerals such as natural or synthetic hectorite, saponite, stevensite, beidellite, montmorillonite, nontronite, and bentonite; swellable mica clay minerals such as Na-type tetrasilicic fluoromica, Li-type tetrasilicic fluoromica, Na-type fluorothenyolite, and Li-type fluoroteniolite; vermiculite; and mixtures of two or more thereof.

More specifically, examples of the inorganic fillers that are commercially available include Laponite XLG (manufactured by Laporte Corp. in U.K., similar to synthetic hectorite), Laponite RD (manufactured by Laporte Corp. in U.K., synthetic hectorite analogue), Thermabis (manufactured by Henkel Corp. in Germany, synthetic hectorite analogue), Smectone SA-1 (manufactured by Kunimine Industries Co., Ltd., saponite analogue), Bengel (manufactured by Hojun Yoko Co. Ltd., natural montmorillonite), Kunipia F (manufactured by Kunimine Industries Co., Ltd., natural montmorillonite), Beegum (manufactured by Vanderbilt Corp. in U.S.A., natural hectorite), Dimonite (manufactured by Topy Industry, Ltd., synthetic swellable mica), Somasif (manufactured by Co-op Chemical Co., Ltd., synthetic swellable mica), SWN (manufactured by Co-op Chemical Co., Ltd., synthetic smectite) , and SWF (manufactured by Co-op Chemical Co. , Ltd., synthetic smectite).

The term "swellable" means the swelling property that is observed when a solvent such as water, alcohol, or ether penetrates between the crystal layers of a lamellar silicate.

It is preferable that the swellable, lamellar silicate is organized by an organizing agent and the polyester resin composition of the invention contains the lamellar silicate in this state. The replacement of the interlayer inorganic ions of the lamellar silicate that is an inorganic component with organic ions makes it possible to increase the compatibility of the lamellar silicate with a resin component, particularly PEI, that will be described later.

It is preferable that the organizing agent is an organo-onium ion. Typical examples of the organo-onium ion include ammonium ion, phosphonium ion, and sulfonium ion. Among these, ammonium ion and phosphonium ion are preferable. From the standpoint of heat resistance, phosphonium ion is particularly preferable.

The phosphonium ion is preferably one represented by the following formula (1).

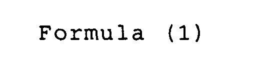

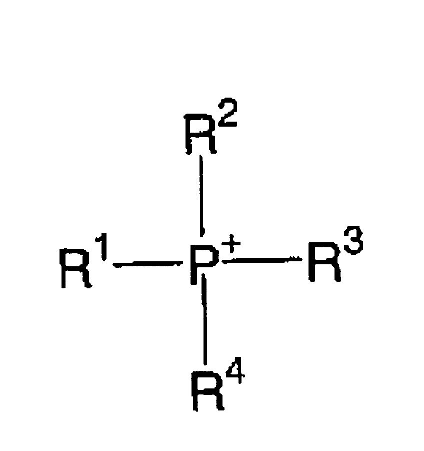

In the formula (1) , R¹, R², R³, and R⁴ independently represent a group selected from the group consisting of a hydrogen atom, an alkyl group having 1 to 20 carbon atoms, and a hydrocarbon group containing a carboxyl group, a hydroxyl group, a phenyl group, and/or an epoxy group. In the alkyl group and the phenyl group, part of hydrogen atoms thereof may be substituted with a group selected from the group consisting of a halogen atom, a hydroxyl group, a carboxyl group, and -COOR (where R represents an alkyl group having 1 to 5 carbon atoms).

Specific examples of the phosphonium ions represented by the above-mentioned formula (1) that are particularly preferred are tetraethylphosphonium, triethylbenzylphosphonium, tetrabutylphosphonium, tetraoctylphosphonium, trimethyldecylphosphonium, trimethyldodecylphosphonium, trimethylhexadecylphosphonium, trimethyloctadecylphosphonium, tributylmethylphosphonium, tributyldodecylphosphonium, tributylhexadodecylphosphonium, tributyloctadecylphosphonium, tetrakis(hydroxymethyl)phosphonium, methyltriphenylphosphonium, ethyltriphenylphosphonium, 2-hydroxyethyltriphenylphosphonium. diphenyldioctylphosphonium, triphenyloctadecylphosphonium, and tetraphenylphosphonium. Among these, tetraethylphosphonium, tetrabutylphosphonium, tetrakis(hydroxymethyl)phosphonium, ethyltriphenylphosphonium, and 2-hydroxyethyltriphenylphosphonium are particularly preferable.

A method for organizing the swellable, lamellar silicate comprises dispersing the swellable, lamellar silicate in a solvent and mixing the resulting dispersion with the phosphonium ions represented by the formula (1) so that the silicate is organized by carrying out ion exchange between part or all of the cations (Na, and/or Li) , which are present between crystal layers of the silicate, and the phosphonium ions. The method is not particularly limited. In this case, examples of the solvent to be used include water, methanol, propanol, isopropanol, ethylene glycol, and 1,4-butanediol.

The content of the inorganic filler (particularly the swellable, lamellar silicate that is organized) is preferably 0.5 to 30% by mass, and more preferably 3 to 20% by mass, based on the total mass of the polyester resin composition. If the content is less than 0.5% by mass, the reinforcing effect to be obtained by the incorporation with the inorganic filler may not be sufficient. On the other hand, if the content exceeds 30% by mass, the dispersibility and the transparency of the inorganic filler may be reduced or the formed articles or films made of the polyester resin composition may become brittle.

### [Polyetherimide]

The polyester resin composition of the invention contains polyetherimide (PEI) as a dispersing aid of the inorganic filler and also as an inhibitor of hydrolysis of the polyester.

As stated above, if the organized inorganic filler is incorporated, the heat resistance is impaired because the organic cation acts as a factor that accelerates hydrolysis of the polymer containing the polyethylene naphthalate in the constituent unit thereof at the time of formation (when heated). In the invention, particularly the use of PEI in combination with the inorganic filler makes it possible to prevent the organic cation of the inorganic filler from coming into direct contact with the polymer and to secure the dispersibility of the inorganic filler because the organic cation is compatible with PEI. For this reason, it is possible to raise the dispersibility of the inorganic filler and remarkably improve the heat resistance of the polyester resin composition.

The polyetherimide (PEI) is an amorphous thermoplastic resin comprised of a repeating unit having an ether group and an imide group. Specific examples of the polyetherimide (PEI) that is commercially available include ULTEM (manufactured by General Electric Company in U.S.A.).

The content of the polyetherimide is preferably 50 to 200 parts by mass, and more preferably 75 to 150 parts by mass, based on 100 parts by mass of the inorganic filler. If the content is less than 50 parts by mass, the effects of the invention such as improvement of the dispersibility of the inorganic filler and the improvement of heat resistance (resistance to hydrolysis) may not be sufficient. On the other hand, if the content exceeds 200 parts by mass, coloration due to PEI may occur.

The polyester resin composition of the invention can be manufactured by a process comprising mixing polyetherimide (PEI) with an inorganic filler by melt-kneading and thereafter melt-kneading the resulting mixture with a polymer containing PEN in the constituent unit thereof and other additives as necessary. The kneader that can be used for the melt-kneading is not particularly limited. Examples of the kneader include a twin-screw extruder, a biaxial rotor-type continuous kneader, a mortar-type continuous kneader (KCK) in which the kneading is carried out between a rotating disk and a stationary disk, a Banbury mixer, and a roll mill.

The polyester resin composition of the invention may contain other additive, such as heat-resistance improving agents exemplified by a hindered phenol antioxidant and a phosphorus-containing antioxidant, insofar as the characteristics and effects of the invention are not impaired.

The polyester resin composition of the invention can be used advantageously in such applications as formed articles, films for optical materials, substrates for magnetic materials, and substrates for image-forming materials.

### EXAMPLES

The present invention will now be explained by the Examples which follow, though it should be understood that the invention is not restricted to these Examples.

### Example 1

As a swellable, lamellar silicate, 5 kg of SWN (synthetic smectite manufactured by Co-op Chemical Co., Ltd.) was used. The silicate was dispersed in 50 liters of a water/methanol solvent mixture. After that, 5 kg of trimethylhexadecylphosphonium was added to the resultant mixture and the resultant was stirred. In this way, an organized, swellable, lamellar silicate that had been treated with trimethylhexadecylphosphonium ions for organization was obtained.

Moreover, ULTEM 1000 (manufactured by General Electric Company in U.S.A.) was prepared as polyetherimide.

On the other hand, a PET/PEN copolymer (PET/PEN copolymerization ratio (% by mol) = 90/10) was obtained by carrying out a polycondensation between 12.05 kg of terephthalic acid and 1.68 kg of dimethyl-2,6-naphthalenedicarboxylic acid, which were acid components, and 9.84 kg of ethylene glycol.

Next, the polyetherimide (PEI) and the organized, swellable, lamellar silicate obtained above were placed at a ratio of 1:1 in a twin-screw extruder (TEM-37 manufactured by Toshiba Machine Co., Ltd.) and were subjected to melt-kneading. In this way, a blend of PEI and the organized, swellable, lamellar silicate was obtained. The melt-kneading was carried out at a screw revolution of 500 rpm and at a temperature of 300°C.

Subsequently, the blend of PEI and the organized, swellable, lamellar silicate and the PET/PEN copolymer were placed in a twin-screw extruder (TEM-37 manufactured by Toshiba Machine Co., Ltd.) such that the proportion of the PET/PEN copolymer/PEI/the organized, swellable, lamellar silicate was 90/5/5 and were subjected to melt-kneading. In this way, a polyester resin composition of the invention was obtained. The melt-kneading was carried out at a screw revolution of 500 rpm and at a temperature of 250°C.

### Examples 2 to 6

Polyester resin compositions wree obtained in the same way as in Example 1, except that PET/PEN ratios in the PET/PEN copolymers and the proportions of the PET/PEN copolymer/PEI/the organized, swellable, lamellar silicate were changed according to the proportions shown in Table 1.

### Comparative Example 1

In place of the PET/PEN copolymer obtained in Example 1, a polyethylene terephthalate (PET) was prepared. The PET alone (PET/PEI/the organized, swellable, lamellar silicate = 100/0/0) was placed in a twin-screw extruder (TEM-37 manufactured by Toshiba Machine Co. , Ltd.) and was subjected to melt-kneading. In this way, a polyester resin composition for comparison was obtained. The melt-kneading was carried out at a screw revolution of 500 rpm and at a temperature of 250°C. The PET was obtained according to a standard method.

### Comparative Example 2

A polyester resin composition for comparison was obtained in the same way as in Comparative Example 1, except that a PET/PEN copolymer was obtained in the same way as in Example 1 and was used in place of the PET used in Comparative Example 1.

### Comparative Example 3

A polyester resin composition for comparison was obtained in the same way as in Example 1, except that polyethylene terephthalate (PET) was used in place of the PET/PEN copolymer obtained in Example 1. The PET was obtained according to a standard method as in Comparative Example 1.

### Comparative Example 4

An organized, swellable, lamellar silicate was obtained in the same way as in Example 1. Moreover, a polyethylene terephthalate (PET) was prepared in place of the PET/PEN copolymer obtained in Example 1. Then, the resulting organized, swellable, lamellar silicate and the PET were placed in a twin-screw extruder (TEM-37 manufactured by Toshiba Machine Co., Ltd.) such that the proportion of the PET/PEI/the organized, swellable, lamellar silicate was 95/0/5 and were subjected to melt-kneading. In this way, a polyester resin composition for comparison was obtained. The melt-kneading was carried out at a screw revolution of 500 rpm and at a temperature of 250°C. The PET was obtained according to a standard method.

### Comparative Example 5

A polyester resin composition for comparison was obtained in the same way as in Comparative Example 4, except that a PET/PEN copolymer was obtained in the same way as in Example 1 and was used in place of the PET used in Comparative Example 4.

### -Evaluations-

By using the polyester resin compositions of the invention and the polyester resin compositions for comparison obtained above, the following evaluations were conducted. The results thereof are shown in Table 1.

### (1) State of dispersion

The diffraction peak of the (001) face of the lamellar silicate was measured by a wide-angle X-ray diffractometry. In addition, the state of dispersion was visually observed using a transmission electron microscope. Based on the results of the measurement and observation, the dispersibility was evaluated according to the following criteria.

### [Criteria]

ⓞ: Diffraction peak was absent and any flocculated particle was not found.
○: Diffraction peak was absent and the proportion of the flocculated particles found was not greater than 5%.
Δ: Diffraction peak was absent and the proportion of the flocculated particles found was less than 30%.
×: Diffraction peak was present and the proportion of the flocculated particles found was 30% or more.

### (2) Moduli of elasticity

A test piece, having a thickness of 1 mm and a width of 10 mm, was made of each polyester resin composition, and subjected to a tension test using a tension tester (manufactured by Toyo Seiki Seisaku-sho, Ltd.). Based on the results, moduli of elasticity were sought and the ratios of improvement (%) of elasticity of the test pieces with respect to elasticity of the test pieces made of the polyester resin compositions obtained in Comparative Examples 1 and 2 (referred to as "nonreinforced resin specimens" in this evaluation) were used as indices for evaluation. The criteria are as follows.

### [Criteria]

ⓞ: Ratio of improvement with respect to nonreinforced resin specimen was 50% or more.
○: Ratio of improvement with respect to nonreinforced resin specimen was 20% or more but less than 50%.
Δ: Ratio of improvement with respect to nonreinforced resin specimen was 5% or more but less than 20%.
× : Ratio of improvement with respect to nonreinforced resin specimen was less than 5% or inferior without being improved.

### (3) Oxygen barrier property

Oxygen transmittance was measured by means of OX-TRAN10/50A (manufactured by Mocon Corp.) and the degree of oxygen transmittance with respect to oxygen transmitttance of the polyester resin compositions obtained in Comparative Examples 1 and 2 (referred to as "nonreinforced resins" in this evaluation) were used as indices for evaluation. The criteria are as follows.

### [Criteria]

ⓞ: 1/10 or less
○: More than 1/10 but 1/5 or less
Δ: More than 1/5 but 1/2 or less
×: More than 1/2

### (4) Average molecular weight

The organized, swellable, lamellar silicate was removed from the polyester resin compositions obtained in Examples and Comparative Examples. After that, the molecular weight distributions of the resin components were measured by means of GPC and number average molecular weights were sought. The proportions (%) of these number average molecular weights with respect to those of the polyester resin compositions obtained in Comparative Examples 1 and 2 (referred to as "nonreinforced resins" in this evaluation) were used as indices for evaluation. The criteria are as follows.

### [Criteria]

ⓞ: 95% or more
○: 90% or more but less than 95%
Δ: 70% or more but less than 90%
×: Less than 70%

### (5) Transparency

A sheet, having a thickness of 0.5 mm, was made from each polyester resin composition, and light transmittance was measured using a turbidity measuring instrument NDH-1001DP (manufactured by Nippon Denshoku Industries Co. , Ltd.) . The proportions (%) of these values with respect to those of the polyester resin compositions obtained in Comparative Examples 1 and 2 (referred to as "nonreinforced resin sheets" in this evaluation) were used as indices for evaluation. The standard is as follows.

### [Criteria]

ⓞ: 95% or more
○: 90% or more but less than 95%
Δ: 70% or more but less than 90%
×: Less than 70%

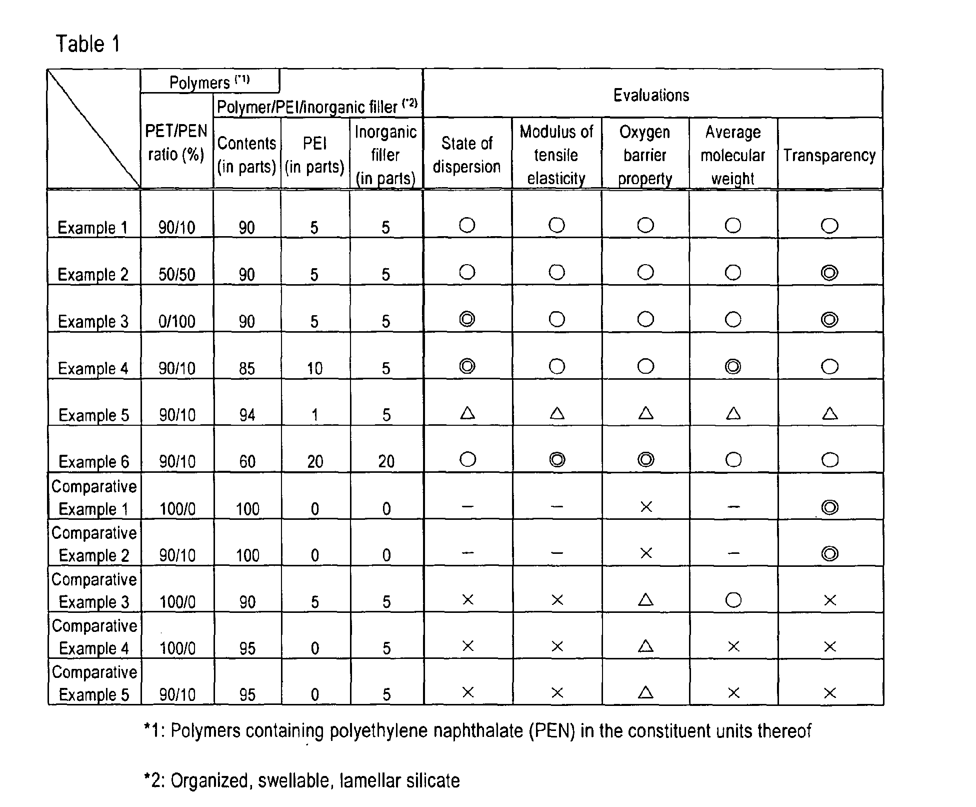

As shown in Table 1, the polyester resin compositions of the invention, which comprises a combination of a lamellar silicate, a polymer containing PEN in the constituent unit thereof, and PEI, has excellent dispersibility of the lamellar silicate and better tensile elasticity (mechanical strength) and also better heat resistance owing to reduced hydrolysis as indicated by the number average molecular weights obtained. In addition, the polyester resin compositions of the invention has excellent oxygen barrier property and good transparency.

On the other hand, the polyester resin compositions for comparison, which dose not use a combination of a lamellar silicate, a polymer containing PEN in the constituent unit thereof, and PEI, exhibites inferior dispersibility of the lamellar silicate and dose not provide satisfactory performances including strength and heat resistance. In particular, in the case where PEI is not incorporated even if a lamellar silicate is incorporated, the compositions exhibit inferior dispersibility of the lamellar silicate and, in addition, do not inhibit hydrolysis and cannot secure the heat resistance. In Comparative Example 3, although PEI is incorporated, the dispersibility is poor due to inferior compatibility and therefore the mechanical strength is inferior because the polymer dose not contain PEN in the constituent unit thereof.

## Claims

1. A polyester resin composition comprising an inorganic filler, polyetherimide, and a polymer containing polyethylene naphthalate in a constituent unit thereof.

2. The polyester resin composition of claim 1, wherein a polymerization ratio of polyethylene naphthalate constituting the polymer is 1 to 100% by mol.

3. The polyester resin composition of claim 1 or 2, wherein the polymer is a copolymer containing polyethylene terephthalate and polyethylene naphthalate as copolymerized components.

4. The polyester resin composition of any of claims 1 to 3, wherein a content of the polyetherimide is 50 to 200 parts by mass with respect to 100 parts by mass of the inorganic filler.

5. The polyester resin composition of any of claims 1 to 4, wherein the content of the inorganic filler is 0.5 to 30% by mass with respect to the total mass of the polyester resin composition.

6. The polyester resin composition of any of claims 1 to 5, wherein the inorganic filler is a swellable, lamellar silicate organized by an organizing agent.

7. The polyester resin composition of any of claims 1 to 6, further comprising a heat-resistance imparting agent.
